# EUROPÄISCHE PATENTSCHRIFT

(11) **EP 0 639 244 B1**
(45) Veröffentlichungstag und Bekanntmachung des Hinweises auf die Patenterteilung: **13.11.1996**
(21) Anmeldenummer: 93909358.9
(22) Anmeldetag: 30.04.1993
(51) Int. Cl.: F16C 13/00, F16C 29/04

(54) **ROLLENLAGER**
ROLLER BEARING
PALIER A ROULEAUX

(30) Priorität: 04.05.1992 DE 9206032 U
(43) Veröffentlichungstag der Anmeldung: 22.02.1995
(73) Patentinhaber: LISEGA GMBH, D-27404 Zeven (DE)
(72) Erfinder: HARDTKE, Hans, D-27404 Zeven (DE)
(74) Vertreter: Lippert, Hans-Joachim, Dipl.-Ing.
(86) Internationale Anmeldenummer: DE9300396
(87) Internationale Veröffentlichungsnummer: WO9322572

(56) Entgegenhaltungen:
- DE-A- 3 216 119
- DE-A- 3 933 119
- FR-A- 1 345 005
- GB-A- 2 233 418
- US-A- 5 070 575

## Beschreibung

Die Erfindung betrifft ein Rollenlager mit einer einen zylindrischen Rollenkörper mittig und drehbar tragenden Achse, die den Rollenkörper beidseitig überragt und mit ihren Enden in einer Halterung angeordnet ist, wobei die Achse zumindest in ihren Endbereichen hohl ausgebildet ist.

Gattungsgemäße Rollenlager werden in großen Stückzahlen z.B. im Bereich der Förder- oder Befestigungstechnik verwendet.

Die Halterungen zur Aufnahme der Achse des Rollenlagers können dabei U-förmig ausgebildet sein, wobei in den beiden Schenkeln des U-förmigen Profiles Bohrungen vorgesehen sind, die von den beiden Enden der Achse durchgriffen werden.

Um zu verhindern, daß sich die Achse in ihrer Längsrichtung verschiebt bzw. um das Rollenlager in der Halterung zu fixieren, weisen die Achsenden üblicherweise Bohrungen auf, durch die z.B. Sicherungsstifte in Form vom Splinten gesteckt werden.

Das Anbringen dieser Bohrungen bei der Herstellung der Rollenlager erfordert einen zusätzlichen Arbeitsgang und verteuert die Rollenlager dementsprechend. Außerdem kann es bei der Montage der Rollenlager vorkommen, daß das Anbringen der Sicherungssplinte vergessen wird, so daß die Achse in ihrer Längsrichtung bewegbar ist und während des Betriebes aus der Halterung herausrutscht.

Außerdem besteht die Gefahr, daß vorhandene Sicherungssplinte von unbefugten Personen entfernt werden und es so zu Betriebsstörungen kommen kann.

Der Erfindung liegt die Aufgabr zugrunde, ein Rollenlager zu schaffen, dessen Herstellung einfach und preiswert ist und bei dem unter Vermeidung von Graten ein Herausrutschen der Achse aus der Halterung sicher verhindert wird.

Diese Aufgabe wird dadurch gelöst, daß die Hohlraumwandung des Endbereichs der Achse durch Umbiegen bzw. Umbördeln gegen die Außenwandung der Halterung festgelegt ist, wobei die Endbereiche der Achse konzentrisch nach außen gegen die Außenwandung der Halterung umgebogen sind.

Durch die hohle Ausbildung der Endbereiche der Achse und das Umbiegen der Hohlraumwandung gegen die Außenwandung der Halterung wird die Achse bereits bei der Herstellung in der Halterung festgelegt und ist in der Halterung gesichert, ohne daß Bohrungen bzw. Sicherungssplinte verwendet werden müssen. Das Umbiegen bzw. Umbördeln der Hohlraumwandung erfolgt bei der Fertigung des Rollenlagers mit bekannten Umformverfahren. Die Achse ist dadurch in der Halterung festgelegt und gegen ein seitliches Verschieben gesichert. Außerdem entsteht ein gratfreier konzentrischer Wulst, der gegen die Außenwandung der Halterung anliegt.

Als Achse kann erfindungsgemäß ein Rundstahl mit hohlen Endbereichen verwendet werden, es ist jedoch auch möglich, ein durchgehendes Rohr zu verwenden, insbesondere dann, wenn die Anforderungen an die Tragkraft des Rollenlagers nicht zu hoch sind.

Um ein seitliches Verschieben des Rollenkörpers auf der Achse zu verhindern, können zwischen der Halterung und der Stirnfläche des Rollenkörpers eine oder mehrere Distanzscheiben angeordnet sein.

Die Lagerung der Rolle auf der Achse kann in bekannter Weise mit Wälzkörpern oder auch gleitend erfolgen. Die Rolle kann freilaufend oder auch angetrieben ausgebildet sein.

Die Erfindung wird in den Zeichnungen beispielhaft veranschaulicht und im nachfolgenden anhand der Zeichnung im einzelnen erläutert. Es zeigen
- Figur 1: eine teilweise aufgebrochene Ansicht eines Rollenlagers, deren Achse in einer Halterung angeordnet ist und
- Figur 2: einen Schnitt durch eine Achse, deren linke Hohlraumwandung umgebördelt ist.

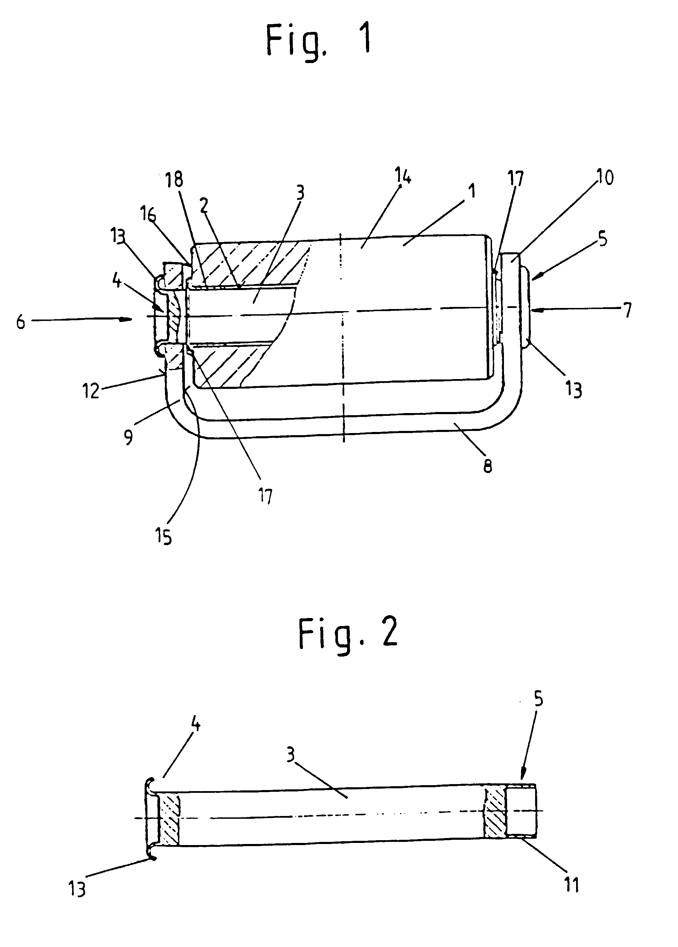

Das in Figur 1 dargestellte Rollenlager 1 ist mittels einer Bohrung 2 drehbar auf eine Achse 3 aufgesteckt. Die Achse 3 durchgreift mit ihren beiden Enden 4, 5 Durchtrittsbohrungen 6, 7 einer U-förmigen Halterung 8 mit seitlichen Schenkeln 9, 10.

Die Enden 4, 5 der Achse 3 sind hohl ausgebildet, wobei die Hohlraumwandung 11 gegen die Außenwandung 12 der Halterung 8 umgebogen ist. Dadurch wird ein konzentrischer Wulst 13 erzeugt, der die Achse 3 in der Halterung 8 fixiert und ein seitliches Verschieben der Achse 3 in der Halterung 8 verhindert.

Um ein seitliches Verschieben des Rollenkörpers 14 auf der Achse 3 zu verhindern, befinden sich zwischen der Innenwandung 15 der Halterung 8 und der Stirnfläche 16 des Rollenkörpers 14 Distanzscheiben 17.

Figur 2 zeigt in einem Schnitt durch die Achse 3 auf der rechten Seite eine unverformte Hohlraumwandung 11, während die Hohlraumwandung 11 des linken Achsenendes 4 zu einem konzentrischen Wulst 13 umgebördelt ist.

In dem in Figur 1 und 2 dargestelltem Ausführungsbeispiel besteht die Achse 3 aus einem Vollmaterial mit hohlen seitlichen Endbereichen 4, 5.

### Bezugszeichenliste

- 1: Rollenlager
- 2: Bohrung
- 3: Achse
- 4, 5: Enden
- 6, 7: Durchtrittsbohrungen
- 8: Halterung
- 9, 10: seitliche Schenkel
- 11: Hohlraumwandung
- 12: Außenwandung
- 13: Wulst
- 14: Rollenkörper
- 15: Innenwandung
- 16: Stirnfläche
- 17: Distanzscheibe
- 18: Lagerbuchse

## Patentansprüche

1. Rollenlager mit einer einen zylindrischen Rollenkörper (14) mittig und drehbar tragenden Achse (3), die den Rollenkörper (14) beidseitig überragt und mit ihren Enden (4, 5) in einer Halterung (8) angeordnet ist, wobei die Achse (3) zumindest in ihren Endbereichen (4, 5) hohl ausgebildet ist, **dadurch gekennzeichnet**, daß die Hohlraumwandung (11) durch Umbiegen bzw. Umbördeln gegen die Außenwandung (12) der Halterung (8) festgelegt ist, wobei die Endbereiche (4, 5) der Achse konzentrisch nach außen gegen die Außenwandung (12) der Halterung (8) umgebogen sind.

2. Rollenlager nach Anspruch 1, **dadurch gekennzeichnet,** daß die Achse (3) als Rohr mit gegen die Außenwandung (12) der Halterung (8) umgebogenen Endbereichen (4, 5) ausgebildet ist.

3. Rollenlager nach einem der Ansprüche 1 oder 2, **dadurch gekennzeichnet**, daß zwischen der Innenwandung (15) der Halterung (8) und der Stirnfläche (16) des Rollenkörpers (14) eine oder mehrere Distanzscheiben (17) angeordnet sind.

## Claims

1. Roller bearing with a supporting shaft (3) which centrally and rotatably carries a cylindrical roller (14), extends beyond the roller (14) on either side and whose ends (4, 5) are fitted in a mounting (8), wherein at least the end zones (4, 5) of the shaft (3) are of hollow design, **characterised in that** the wall (11) of the cavity is secured in position against the outer surface (12) of the mounting (8) by bending it round or beading it over, wherein the end zones (4, 5) of the shaft are concentrically bent outwards against the outer surface (12) of the mounting (8).

2. Roller bearing as per Claim 1, **characterised in that** the shaft (3) is designed as a tube with end zones (4, 5) bent round against the outer surface (12) of the mounting (8).

3. Roller bearing as per one of the Claims 1 or 2, **characterised in that** one or more spacers (17) are arranged between the inner surface (15) of the mounting (8) and the face end (16) of the roller (14).

## Revendications

1. Support pour rouleau, comportant un axe (3) qui porte au milieu et avec possibilité de rotation un corps de roulement cylindrique (14), fait saillie des deux côtés sur le corps de roulement (14) et est monté par ses extrémités (4,5) dans un élément de support (8), l'axe (3) étant réalisé sous forme creuse, au moins dans ses parties d'extrémité, caractérisé en ce que la paroi (11) de la cavité de l'axe est fixée par recourbement ou rabattement contre la paroi extérieure (12) de l'élément de support (8), les parties d'extrémité (4,5) de l'axe étant recourbées concentriquement vers l'extérieur contre la paroi extérieure (12) de l'élément de support.

2. Support pour rouleau selon la revendication 1, caractérisé en ce que l'axe (3) est réalisé sous la forme d'un tube dont les parties d'extrémité (4,5) sont recourbées contre la paroi extérieure (12) de l'élément de support (8).

3. Support pour rouleau selon la revendication 1 ou 2, caractérisé en ce qu'une ou plusieurs rondelles d'écartement (17) sont disposées entre la paroi intérieure (15) de l'élément de support (8) et la face frontale (16) du corps de roulement (14).
